# EUROPÄISCHE PATENTSCHRIFT

(11) **EP 1 714 735 B1**
(45) Veröffentlichungstag und Bekanntmachung des Hinweises auf die Patenterteilung: **31.10.2007**
(21) Anmeldenummer: 06004016.9
(22) Anmeldetag: 28.02.2006
(51) Int. Cl.: B23Q 11/00, B23B 47/00

(54) **Zusatzgerät für Handbohrmaschinen zum Absaugen von Staub**
Accessory device for hand drills for sucking off dust
Dispositif accessoire pour perceuses à main pour aspirer de la poussière

(30) Priorität: 21.04.2005 DE 102005018481; 09.12.2005 DE 102005058791
(43) Veröffentlichungstag der Anmeldung: 25.10.2006
(73) Patentinhaber: TTS Tooltechnic Systems AG & Co. KG, 73240 Wendlingen (DE)
(72) Erfinder: Maier, Peter, 73272 Neidlingen (DE); Salzmann, Karl, 55728 Hahnheim (DE)
(74) Vertreter: Reimold, Otto

(56) Entgegenhaltungen:
- DE-U1- 9 306 373
- GB-A- 2 159 619
- US-A- 5 332 343
- US-A- 5 653 561
- PATENT ABSTRACTS OF JAPAN Bd. 012, Nr. 478 (M-775), 14. Dezember 1988 (1988-12-14) -& JP 63 200905 A (NIKKEN TOOL KK), 19. August 1988 (1988-08-19)

## Beschreibung

Die Erfindung betrifft ein Zusatzgerät für Handbohrmaschinen, an deren Vorderseite ein in Gebrauchslage in axialer Richtung von der Handbohrmaschine abstehendes Bohrwerkzeug lösbar befestigbar ist, zum Absaugen des beim Bohren entstehenden Staubes, wobei das Zusatzgerät ein an der Vorderseite der Handbohrmaschine lösbar befestigbares Gerätegehäuse aufweist, das ein sich in Gebrauchslage in axialer Richtung erstreckendes Absauggehäuse mit einem quer zum Absauggehäuse abstehenden Handgriff bildet, wobei das Absauggehäuse einen Absaugraum umschließt, an seinem in Gebrauchslage der Handbohrmaschine entgegengesetzten, am zu bohrenden Werkstück zur Anlage gelangenden vorderen Ende offen ist und mindestens über einen Teil seiner axialen Länge in axialer Richtung elastisch zusammendrückbar ist, wobei das Bohrwerkzeug in Gebrauchslage durch den Absaugraum verlaufen kann und der Absaugraum mit einer Staubabsaugeinrichtung verbindbar ist.

Mit Hilfe eines solchen Zusatzgerätes kann der beim Bohren beliebiger Werkstücke entstehende Bohrstaub abgesaugt werden, so dass er nicht in die Umgebung austritt und diese verschmutzt.

Ein Zusatzgerät dieser Art ist aus der JP 63-200905 A bekannt.

Beim Gebrauch des bekannten wie des vorliegenden Zusatzgerätes liegt das Absauggehäuse mit seinem vorderen Ende am Werkstück an, so dass der ansonsten vorne um das Bohrwerkzeug herum offene Absaugraum durch das Werkstück verschlossen wird und der gesamte Bohrstaub in den Absaugraum eintritt. Beim weiteren Vorschieben der Handbohrmaschine bleibt das vordere Ende des Absauggehäuses in Anlage am Werkstück. Dabei verkürzt sich das Absauggehäuse, da es durch die vom Werkstück her ausgeübte Kraft in axialer Richtung zusammengedrückt wird. Der Absaugraum kann über einen Absaugschlauch mit einer Staubabsaugeinrichtung verbunden werden, wie es bei Handwerkzeugmaschinen ansonsten üblich ist.

Der Benutzer kann die mit dem Zusatzgerät versehene Handbohrmaschine zusätzlich zum Maschinengriff an dem quer zum Absauggehäuse abstehenden Handgriff halten.

Ein Zusatzgerät mit einer am vorderen Endbereich des Absauggehäuses angreifenden Einrichtung zum Zurückbewegen des Absauggehäuses ist aus der US-A-5 653 561 bekannt. Diese Einrichtung weist einen Ringkörper auf, der in eine Falte eines das Absauggehäuse bildenden Faltenbalgs eingesetzt wird. An dem Ringkörper kann ein vom Benutzer ergreifbarer Stab befestigt werden. Dabei wird der Faltenbalg durch die Gewichtskraft des Ringkörpers und des Stabes belastet.

Die vorliegende Erfindung hat sich die Aufgabe gestellt, ein Zusatzgerät für Handbohrmaschinen - dies umfasst auch Schlagbohrer und Bohrhämmer - zum Absaugen des beim Bohren entstehenden Staubes zu schaffen, das einfach anwendbar ist und wirksam arbeitet. Ferner soll es einfach im Aufbau und möglichst kostengünstig herstellbar sein.

Diese Aufgabe wird erfindungsgemäß durch ein Zusatzgerät gemäß Anspruch 1 gelöst.

Bei dem erfindungsgemäßen Zusatzgerät kann der Benutzer auf in der Handhabung einfache Weise den vorderen Endbereich des Absauggehäuses jederzeit zurückschieben, so dass die Bohrstelle und das Bohrwerkzeug frei sichtbar sind. Lässt der Benutzer die Einrichtung zum Zurückbewegen des Absauggehäuses wieder los, gelangt das Absauggehäuse aufgrund seiner elastischen Eigenschaften von selbst wieder in seine am Werkstück anliegende Stellung.

Zweckmäßigerweise weist das Gerätegehäuse eine auf eine maschinenseitige Halspartie steckbare und auf dieser festklemmbare Ringpartie auf. Eine solche Halspartie weisen praktisch alle Handbohrmaschinen auf, so dass geräteseitig nichts verändert werden muss. Da die Halspartien der auf dem Markt befindlichen Handbohrmaschinen einen gleichen Durchmesser aufweisen, ist das erfindungsgemäße Zusatzgerät universell verwendbar.

Der elastisch zusammendrückbare Bereich des Absauggehäuses wird zweckmäßigerweise von einem Faltenbalg gebildet. Prinzipiell kann das Absauggehäuse auch über seine gesamte Länge von einem Faltenbalg gebildet werden.

In diesem Zusammenhang ist bevorzugt vorgesehen, dass der dem maschinenseitigen Ende zugewandte hintere Bereich des Absauggehäuses aus steifem Material und der dem entgegengesetzten vorderen Ende zugewandte vordere Bereich des Absauggehäuses elastisch zusammendrückbar ist. Auf diese Weise ergibt sich ein fester Halt des Zusatzgerätes an der Handbohrmaschine.

Der Faltenbalg ist zweckmäßigerweise auswechselbar angeordnet, so dass er im Falle eines Verschleißes oder wenn ein Faltenbalg anderer Größe, beispielsweise zur Anpassung an Bohrwerkzeuge mit anderer Länge, benötigt wird, ausgetauscht werden kann.

Eine weitere zweckmäßige Maßnahme besteht darin, dass durch den Handgriff ein Absaugkanal verläuft, der einerseits mit dem Absaugraum des Absauggehäuses verbunden und andererseits mit dem Staubabsaugschlauch verbindbar ist. Der Bohrstaub wird dann sozusagen durch den Handgriff hindurch abgesaugt.

Weitere zweckmäßige Ausgestaltungen sind in den Unteransprüchen angegeben.

Nachstehend wird ein zweckmäßiges Ausführungsbeispiel der Erfindung anhand der Zeichnung beschrieben. Es zeigen:
- Figur 1: ein an einer nur strichpunktiert angedeuteten Handbohrmaschine befestigtes Zusatzgerät gemäß vorliegender Erfindung im Schnitt und
- Figur 2: das gleiche Zusatzgerät mit zwei Zusatzeinrichtungen in Einzeldarstellung in Seitenansicht, wobei die erste Zusatzeinrichtung von Abstützvorsprüngen 32 am vorderen Ende des Absauggehäuses und die zweite Zusatzeinrichtung von einer Einrichtung 33 zum Zurückbewegen des Absauggehäuses durch den Benutzer in Richtung vom Werkstück weg gebildet wird.

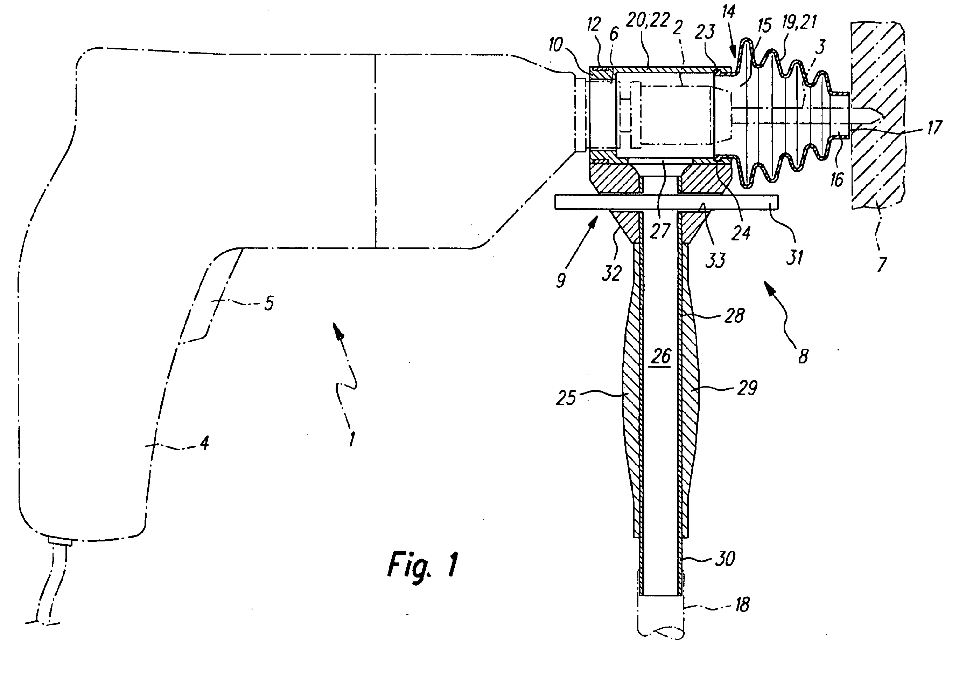

Die in Figur 1 strichpunktiert angedeutete Handbohrmaschine 1 ist üblicher Bauart. Sie enthält eine von einem Antriebsmotor angetriebene Antriebswelle, die treibend mit einer vor dem Maschinengehäuse angeordneten Einspanneinrichtung 2, üblicherweise ein Spannfutter, verbunden ist, in der ein Bohrwerkzeug 3 lösbar festgespannt werden kann. Das Bohrwerkzeug 3 steht in der Antriebswelle entsprechender axialer Richtung von der Handbohrmaschine 1 ab und rotiert beim Betrieb. Die Handbohrmaschine 1 weist einen pistolenartig abstehenden Griff 4 auf, an dem sie vom Benutzer gehalten werden kann. Das Ein- und Ausschalten der Handbohrmaschine 1 erfolgt mittels eines Schalter-Betätigungselements 5 an der Vorderseite des Griffs 4. Es versteht sich, dass es sich bei der Handbohrmaschine 1 auch um einen Schlagbohrer oder einen Bohrhammer handeln kann.

Vorne am Maschinengehäuse ist eine zylindrische Halspartie 6 konzentrisch zur Antriebswelle 6 angeordnet, auf der Zusatzgeräte befestigt werden können. Die Einspanneinrichtung 2 befindet sich vor der Halspartie 6.

In Figur 1 ist ferner ein Werkstück 7 angedeutet, in das mittels des Bohrwerkzeugs 3 ein Loch eingebracht werden soll. Der beim Bohren entstehende Staub wird mit Hilfe eines Zusatzgerätes 8 abgesaugt, das ein an der Vorderseite der Handbohrmaschine 1 lösbar befestigbares Gerätegehäuse 9 aufweist. An dem Gerätegehäuse 9 ist eine Ringpartie 10 angeordnet oder einstückig ausgebildet, die auf die maschinenseitige Halspartie 6 gesteckt und dort festgeklemmt wird. Die Ringpartie 10 weist mindestens einen axialen Klemmschlitz 11 auf, so dass sich ihr Durchmesser verändern lässt. Das Festklemmen auf der Halspartie 6 erfolgt mittels eines beim Ausführungsbeispiel bandartigen Klemmrings 12, der die Ringpartie 10 umschließt und mittels eines Exenterhebels 13 festgespannt werden kann. Derartige Klemmeinrichtungen sind allgemein üblich, so dass sie in der Zeichnung nur schematisch dargestellt ist. Durch Verschwenken des Exzenterhebels 13 um eine axial gerichtete Schwenkachse wird der Klemmring 12 festgezogen oder gelöst.

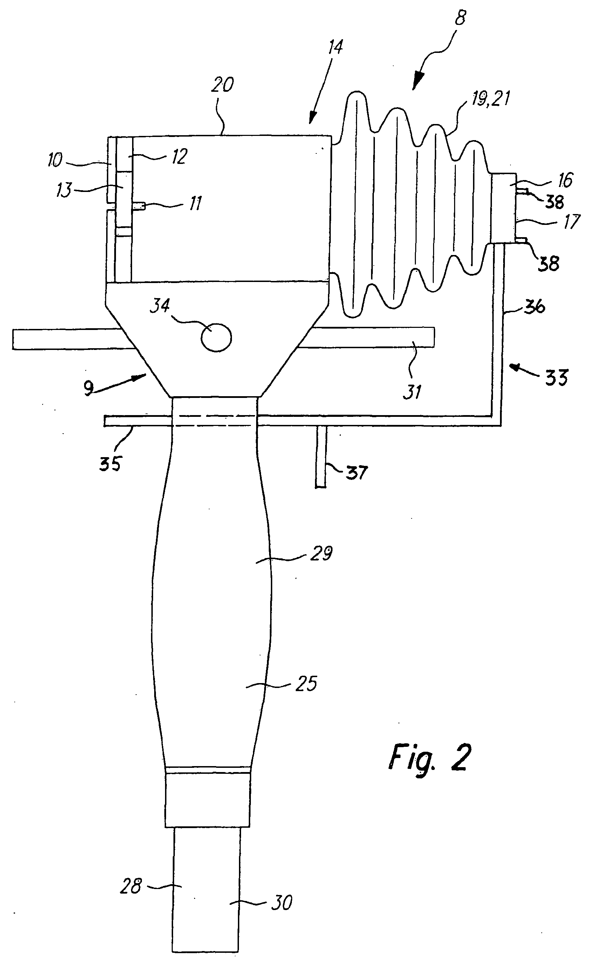

Das Gerätegehäuse 9 des Zusatzgerätes 8 bildet ein sich in Gebrauchslage in axialer Richtung erstreckendes Absauggehäuse 14, das einen Absaugraum 15 umschließt. Das Absauggehäuse 14 steht in axialer Richtung vor die Einspanneinrichtung 2 vor. Die Einspanneinrichtung 2 und das Bohrwerkzeug 3 verlaufen in der Gebrauchslage mit radialem Abstand durch den Absaugraum 15, so dass der Bohrstaub durch den Absaugraum 15 hindurch abgeführt werden kann. Der Absaugraum 15 ist an seinem der Handbohrmaschine 1 zugewandten hinteren Ende durch die Befestigung des Zusatzgerätes 8 auf der Halspartie 6 abgeschlossen (die Ringpartie 10 ist am hinteren Ende des Absauggehäuses 14 und somit am hinteren Ende des Absaugraumes 15 angeordnet). An seinem entgegengesetzten vorderen Ende 16 ist das Absauggehäuse 14 offen. Dabei kann die Stirnseite 17 des vorderen Endes 16 eine Anlagefläche bilden (Figur 1), mit der das Absauggehäuse 14 beim Bohren zur Anlage an das Werkstück 7 gelangt. Es kann jedoch zweckmäßig sein (Figur 2), dass das Absauggehäuse 14 an seinem vorderen Ende 16 über den Umfang verteilt angeordnete, axial vor die Stirnseite 17 vorstehende Abstützvorsprünge 38 aufweist, über die sich das Absauggehäuse 14 beim Gebrauch am zu bohrenden Werkstück abstützt. Auf diese Weise liegt das Absauggehäuse sozusagen nur punktweise am Werkstück an, so dass eine Verschmutzungsgefahr des Werkstücks vermieden wird. Zweckmäßigerweise sind drei Abstützvorsprünge 38 vorgesehen. Das Absauggehäuse 14 ist ferner mindestens über einen Teil seiner axialen Länge in axialer Richtung elastisch zusammendrückbar ausgebildet.

Das Bohrwerkzeug 3 wird zweckmäßigerweise so weit in die Einspanneinrichtung 2 gesteckt, dass es im Ausgangszustand, bevor mit dem Bohren begonnen wird, vorne etwas aus dem Absauggehäuse 14 vorsteht, so dass die Bohrerspitze bei ihrem Ansetzen an das Werkstück 7 eingesehen werden kann. Sodann legt sich die Stirnseite 17 des Absauggehäuses 14 gegen das Werkstück 7, so dass der Bohrstaub nicht in die Umgebung gelangen kann, sondern in den vom Absauggehäuse 14 umgebenen Absaugraum 15 eintritt. Der Innendurchmesser des vorderen Endes 16 des Absauggehäuses 14 ist um etliches größer als der Durchmesser des Bohrwerkzeugs 3, so dass der Bohrstaub ungehindert in den Absaugraum 15 gelangt. Beim weiteren Bohren, wenn die Handbohrmaschine 1 gegen das Werkstück 7 vorgeschoben wird, bleibt die Stirnseite 17 des Absauggehäuses 14 in Anlage am Werkstück 7, wobei sich das Absauggehäuse 14 aufgrund seiner elastischen Nachgiebigkeit in axialer Richtung verkürzt.

Der Staubabsaugraum 15 ist mit einer Staubabsaugeinrichtung verbindbar, die wie üblich von einem Staubabsauggerät gebildet wird. Die Verbindung des Zusatzgerätes 8 mit dem Staubabsauggerät kann mittels eines von der Staubabsaugeinrichtung herkommenden Saugschlauches 18 erfolgen, der an das Zusatzgerät 8 angeschlossen wird. Der Bohrstaub wird im Staubabsauggerät in üblicher Weise gesammelt und dann entsorgt.

Das Absauggehäuse 14 weist einen kreisförmigen Querschnitt auf. Sein in axialer Richtung elastisch zusammendrückbarer Bereich wird von einem Faltenbalg 19 gebildet. Der Faltenbalg 19 besteht zweckmäßigerweise aus gummielastisch zusammendrückbarem Kunststoffmaterial.

Beim Ausführungsbeispiel ist das Absauggehäuse 14 zweigeteilt, wobei der dem maschinenseitigen Ende zugewandte hintere Bereich 20 des Absauggehäuses 14 aus steifem Material, zweckmäßigerweise Kunststoff, besteht und der dem entgegengesetzten vorderen Ende 16 zugewandte vordere Bereich 21 elastisch zusammendrückbar ausgebildet ist. Dabei wird der hintere Bereich 20 von einem im Wesentlichen zylindrischen Hülsenteil 22 und der vordere Bereich 21 von dem Faltenbalg 19 gebildet. Das hintere Ende des Hülsenteils 22 bildet die einstückig angesetzte Ringpartie 10. Das dargestellte Hülsenteil 22 erstreckt sich in der Gebrauchslage etwa bis zur Vorderseite der Einspanneinrichtung 2.

Der Faltenbalg 19 weist eine sich nach hinten hin erweiternde Gestalt auf. Demgemäß wird der Faltenbalg 19 von ringförmig umlaufenden, in axialer Richtung aufeinanderfolgenden Falten gebildet, deren Durchmesser nach hinten hin zunimmt. Im Längsschnitt gesehen ergibt sich beiderseits der axialen Richtung jeweils ein um eine zur axialen Richtung geneigte Linie hin und her gehender Verlauf der Faltenbalgwandung. Auf diese Weise legen sich die ringförmig umlaufenden Falten des Faltenbalges beim Zusammendrücken sozusagen ineinander, so dass sich der Faltenbalg 19 auf eine kleinere Länge verkürzen lässt als im Falle eines Faltenbalgs mit durchweg gleich großen Falten.

In Abwandlung des dargestellten Ausführungsbeispiels wäre es auch möglich, das Absauggehäuse insgesamt elastisch zusammendrückbar, insbesondere nach Art eines Faltenbalges, auszubilden. Ferner muss der Faltenbalg nicht unbedingt das vordere Ende 16 des Absauggehäuses 14 bilden. Denkbar wäre beispielsweise, dass das vordere Ende des Absauggehäuses von einem steifen Ringkörper gebildet wird.

Der Faltenbalg 19 ist zweckmäßigerweise auswechselbar an dem Zusatzgerät 8 angeordnet, so dass er beispielsweise im Falle der Verwendung eines Bohrwerkzeugs anderer Länge oder wenn er verschlissen ist, ausgetauscht werden kann. Dies erfolgt beim Ausführungsbeispiel dadurch, dass der rückwärtige Endbereich des Faltenbalgs 19 mit dem Hülsenteil 22 durch lösbares Verrasten verbunden ist. Hierzu kann am rückwärtigen Ende des Faltenbalgs 19 ein ringförmig umlaufender, radial abstehender Rastvorsprung 23 angeordnet sein, der in eine Ringnut 24 des Hülsenteils 22 eingreift. Da der Faltenbalg 19 aus elastisch verformbarem Material besteht, kann die Rastverbindung leicht gelöst und hergestellt werden. Der Faltenbalg 19 wird mit seinem Rastvorsprung 23 sozusagen in die Ringnut 24 des Hülsenteils 22 eingeknüpft. Im dargestellten Falle ist der Rastvorsprung 23 am Außenumfang des Faltenbalgs 19 und die Ringnut 24 am Innenumfang des Hülsenteils 22 angeordnet, d.h. der rückwärtige Endbereich des Faltenbalgs 19 ist in das Hülsenteil 22 eingesteckt. Die Anordnung könnte jedoch auch umgekehrt so sein, dass der Faltenbalg auf das Hülsenteil aufgesteckt und am Außenumfang des Hülsenteils verrastet ist.

Das Zusatzgerät 8 weist einen quer zum Absauggehäuse 14 abstehenden Handgriff 25 auf, so dass die mit dem Zusatzgerät 8 versehene Handbohrmaschine 1 beidhändig am Maschinengriff 4 und an dem Handgriff 25 ergriffen werden kann. Der Handgriff 25 steht von dem aus steifem Material bestehenden Hülsenteil 22 ab.

Durch den Handgriff 25 verläuft ein Absaugkanal 26, der einerseits mit dem Absaugraum 15 des Absauggehäuses 14 verbunden ist und andererseits mit dem zur Staubabsaugeinrichtung führenden Absaugschlauch 18 verbunden werden kann. Der Absaugkanal 26 mündet quer zur axialen Richtung des Absauggehäuses 14 in dessen Absaugraum 15. Das Hülsenteil 22 ist dementsprechend an seiner dem Handgriff 25 zugewandten Seite mit einer die Verbindung zum Absaugkanal 26 herstellenden Öffnung 27 versehen.

Der Absaugkanal 26 kann von einem Rohrstück 28 gebildet werden, auf dem ein den Handgriff 25 bildendes Griffelement 29 angeordnet ist. Der Absaugkanal 26 und somit bei Vorhandensein des Rohrstücks 28 dieses verläuft in Längsrichtung des Handgriffes 25 durch diesen.

Am dem Absauggehäuse 14 entgegengesetzten Ende des Handgriffs 25 ist in Verlängerung des Handgriffs ein Anschlussstutzen 30 zum Anschließen des Absaugschlauchs 18 angeordnet, der vom vor das Griffelement 29 vorstehenden Endbereich des Rohrstücks 28 gebildet werden kann, auf den der Absaugschlauch 18 aufgesteckt wird.

Es versteht sich, dass das Rohrstück 28 auch weggelassen werden kann, wenn der Absaugkanal 26 einstückig in den Handgriff 25 eingeformt wird. Ferner kann es sich bei dem Anschlussstutzen 30 um eine einstückige Verlängerung des Handgriffs 25 handeln.

An dem Gerätegehäuse 9 kann des Weiteren ein Anschlagstab 31 zur Bohrtiefenbegrenzung parallel zur axialen Richtung verstellbar gelagert sein. Hierzu weist beim Ausführungsbeispiel der Übergangsbereich 32 zwischen dem Absauggehäuse 14 und dem Handgriff 25 eine sich parallel zur axialen Richtung erstreckende Lagerbohrung 33 auf, durch die der Anschlagstab 31 gesteckt ist. Dem Anschlagstab 31 ist ein mit der Hand betätigbares Klemmelement 34 zugeordnet, mit dem der verschiebbar in der Lagerbohrung 23 angeordnete Anschlagstab 31 in seiner jeweiligen Längslage festgestellt werden kann.

Der Benutzer sollte die Möglichkeit haben, zumindest beim Ansetzen des Bohrers an das Werkstück die Bohrstelle zu sehen. Zu diesem Zweck kann eine nur in Figur 2 eingezeichnete Einrichtung 33 zum Zurückbewegen des Absauggehäuses 14 durch den Benutzer in Richtung vom Werkstück weg vorhanden sein. Die Einrichtung 33 greift einerseits am vorderen Endbereich des Absauggehäuses 14, zweckmäßigerweise vorne am sich nach hinten hin erweiternden Faltenbalg 19 an und ist andererseits an einer für den Benutzer zugänglichen Stelle gelagert. Im dargestellten Falle ist diese Lagerung im Bereich des quer zum Absauggehäuse 14 abstehenden Handgriffs 25 vorgesehen. Dabei handelt es sich zweckmäßigerweise um eine parallel zur axialen Richtung verschiebbare Lagerung, beispielsweise indem die Einrichtung 33 einen am Handgriff 25 geführten Führungsstab 35 aufweist, der parallel zur axialen Richtung verläuft. Der Führungsstab 35 ist mit einem quer von ihm abstehenden und am vorderen Endbereich des Faltenbalgs 19 befestigten Verbindungselement 36 verbunden, so dass beim Bewegen des Führungsstabs 35 in Figur 2 nach links das Verbindungselement 36, zweckmäßigerweise ebenfalls ein Stab, und mit diesem der vordere Endbereich des Faltenbalgs 19 nach links mitgenommen und im Anwendungsfall die Bohrstelle sichtbar wird. Am Führungsstab 35 ist eine von ihm abstehende Betätigungspartie 37 angeordnet, an der der Benutzer mit einem Finger seiner den Handgriff 25 haltenden Hand angreifen kann.

Lässt der Benutzer die Einrichtung 33, d.h. beim Ausführungsbeispiel die Betätigungspartie 37 los, gelangt der Faltenbalg 19 aufgrund seiner elastischen Eigenschaften von selbst wieder in seine am Werkstück anliegende Stellung.

Das Zurückbewegen des Absauggehäuses 14 zur Handbohrmaschine 1 hin erfolgt also verallgemeinert entgegen einer elastischen Kraft, die auch von einer gesonderten Rückholfeder aufgebracht werden kann.

Das beschriebene Zusatzgerät 8 ist kompakt und verhältnismä-ßig leichtgewichtig. Es ist ferner robust und unkompliziert in der Handhabung. Da es zumindest im Wesentlichen aus Kunststoff besteht, ist es außerdem korrosionsfrei. Weitere Vorteile sind die Langlebigkeit und dass es universell für alle handelsüblichen Bohrmaschinen passend ist. Des Weiteren ermöglicht die Auswechselbarkeit des Faltenbalgs den Einsatz bei unterschiedlichen Saugarbeiten und die Verwendung bei verschiedenen Längen des Bohrwerkzeugs. Schließlich kann das Zusatzgerät so bemaßt werden, dass die vorgegebenen Eckmaße der Bohrmaschine nicht negativ beeinflusst werden.

## Patentansprüche

1. Zusatzgerät für Handbohrmaschinen, an deren Vorderseite ein in Gebrauchslage in axialer Richtung von der Handbohrmaschine abstehendes Bohrwerkzeug lösbar befestigbar ist, zum Absaugen des beim Bohren entstehenden Staubes, wobei das Zusatzgerät ein an der Vorderseite der Handbohrmaschine (1) lösbar befestigbares Gerätegehäuse (9) aufweist, das ein sich in Gebrauchslage in axialer Richtung erstreckendes Absauggehäuse (14) mit einem quer zum Absauggehäuse (14) abstehenden Handgriff (25) bildet, wobei das Absauggehäuse (14) einen Absaugraum (15) umschließt, an seinem in Gebrauchslage der Handbohrmaschine (1) entgegengesetzten, am zu bohrenden Werkstück (7) zur Anlage gelangenden vorderen Ende (16) offen ist und mindestens über einen Teil seiner axialen Länge in axialer Richtung elastisch zusammendrückbar ist, wobei das Bohrwerkzeug (3) in Gebrauchslage durch den Absaugraum (15) verlaufen kann und der Absaugraum (15) mit einer Staubabsaugeinrichtung verbindbar ist, wobei eine Einrichtung (33) zum Zurückbewegen des Absauggehäuses (14) durch den Benutzer in Richtung vom Werkstück weg vorhanden ist, **dadurch gekennzeichnet, dass** die Einrichtung (33) zum Zurückbewegen des Absanggehäuses (14) einerseits am vorderen Endbereich des Absauggehäuses (14) angreift und andererseits im Bereich des Handgriffs (25) an einer für den Benutzer zugänglichen Stelle gelagert ist.

2. Zusatzgerät nach Anspruch 1, **dadurch gekennzeichnet, dass** das Gerätegehäuse (9) eine auf eine maschinenseitige Halspartie (6) steckbare und auf dieser festklemmbare Ringpartie (10) aufweist.

3. Zusatzgerät nach Anspruch 2, **dadurch gekennzeichnet, dass** die Ringpartie (10) am maschinenseitigen Ende des Absauggehäuses (14) angeordnet ist.

4. Zusatzgerät nach einem der Ansprüche 1 bis 3, **dadurch gekennzeichnet, dass** das Absauggehäuse (14) oder der elastisch zusammendrückbare Bereich des Absauggehäuses (14) von einem Faltenbalg (19) gebildet wird.

5. Zusatzgerät nach Anspruch 4, **dadurch gekennzeichnet, dass** der Faltenbalg (19) eine sich nach hinten hin erweiternde Gestalt aufweist.

6. Zusatzgerät nach einem der Ansprüche 1 bis 5, **dadurch gekennzeichnet, dass** der dem maschinenseitigen Ende zugewandte hintere Bereich (20) des Absauggehäuses (14) aus steifem Material und der dem entgegengesetzten vorderen Ende (16) zugewandte vordere Bereich (21) des Absauggehäuses (14) in axialer Richtung elastisch zusammendrückbar ist.

7. Zusatzgerät nach Anspruch 6, **dadurch gekennzeichnet, dass** der aus steifem Material bestehende hintere Bereich (20) des Absauggehäuses (14) von einem Hülsenteil (22) gebildet wird, an das der den vorderen Bereich (21) des Absauggehäuses (14) bildende Faltenbalg (19) angesetzt ist.

8. Zusatzgerät nach einem der Ansprüche 4 bis 7, **dadurch gekennzeichnet, dass** der Faltenbalg (19) auswechselbar angeordnet ist.

9. Zusatzgerät nach einem der Ansprüche 1 bis 8, **dadurch gekennzeichnet, dass** das Absauggehäuse (14) im Querschnitt kreisförmig ist.

10. Zusatzgerät nach einem der Ansprüche 1 bis 9, **dadurch gekennzeichnet, dass** durch den Handgriff (25) ein Absaugkanal (26) verläuft, der einerseits mit dem Absaugraum (15) des Absauggehäuses (14) verbunden und andererseits mit der Staubabsaugeinrichtung verbindbar ist.

11. Zusatzgerät nach Anspruch 10, **dadurch gekennzeichnet, dass** der Absaugkanal (26) von einem Rohrstück (28) gebildet wird, auf dem ein den Handgriff (25) bildendes Griffelement (29) angeordnet ist.

12. Zusatzgerät nach Anspruch 10 oder 11, **dadurch gekennzeichnet, dass** in Verlängerung des Handgriffs (25) ein Anschlussstutzen (30) zum Anschließen eines Staubabsaugschlauchs angeordnet ist.

13. Zusatzgerät nach Anspruch 12, **dadurch gekennzeichnet, dass** der Anschlussstutzen (30) vom vor das Griffelement (29) vorstehenden Endbereich des Rohrstücks (28) gebildet wird.

14. Zusatzgerät nach einem der Ansprüche 1 bis 13, **dadurch gekennzeichnet, dass** an dem Gerätegehäuse (9) ein Anschlagstab (31) zur Bohrtiefenbegrenzung parallel zur axialen Richtung verstellbar gelagert ist.

15. Zusatzgerät nach einem der Ansprüche 1 bis 14, **dadurch gekennzeichnet, dass** die Einrichtung (33) zum Zurückbewegen des Absauggehäuses (14) parallel zur axialen Richtung verschiebbar gelagert ist.

16. Zusatzgerät nach Anspruch 15, **dadurch gekennzeichnet, dass** die Einrichtung (33) zum Zurückbewegen des Absauggehäuses (14) einen am Handgriff (25) geführten Führungsstab (35) aufweist.

17. Zusatzgerät nach Anspruch 16, **dadurch gekennzeichnet, dass** der Führungsstab (35) mit einem quer von ihm abstehenden und am vorderen Endbereich des Faltenbalgs (19) befestigten Verbindungselement (36) verbunden ist.

18. Zusatzgerät nach Anspruch 16 oder 17, **dadurch gekennzeichnet, dass** am Führungsstab (35) eine von ihm abstehende Betätigungspartie (37) angeordnet ist, an der der Benutzer mit einem Finger seiner den Handgriff (25) haltenden Hand angreifen kann.

19. Zusatzgerät nach einem der Ansprüche 1 bis 18, **dadurch gekennzeichnet, dass** das Absauggehäuse (14) an seinem vorderen Ende über den Umfang verteilt angeordnete, axial vorstehende Abstützvorsprünge (38) aufweist, über die sich das Absauggehäuse (14) beim Gebrauch am zu bohrenden Werkstück abstützt.

## Claims

1. Accessory for hand drills, on the front of which can be attached releasably a drilling tool protruding in the axial direction of the hand drill in the usage position, for extraction of the dust occurring on drilling, wherein the accessory has a device housing (9) which can be attached releasably to the front of the hand drill (1), said device housing (9) forming an extractor housing (14) extending in the axial direction in the usage position, with a handle (25) protruding transversely to the extractor housing (14), wherein the extractor housing (14) encloses an extraction chamber (15), is open at its front end (16) opposite the hand drill (1) in the usage position and comes to rest on the workpiece to be drilled (7), and is resiliently compressible in the axial direction over at least part of its axial length, wherein the drilling tool (3) in the usage position can pass through the extraction chamber (15) and the extraction chamber (15) can be connected to a dust extraction device, wherein a device (33) is present with which the user can move the extractor housing (14) back in the direction away from the workpiece, **characterised in that** the device (33) for moving back the extractor housing (14) on one side engages on the front end area of the extractor housing (14) and on the other side is mounted in the area of the handle (25) at a point accessible to the user.

2. Accessory according to Claim 1, **characterised in that** the device housing (9) has a ring part (10) that can be pushed onto a neck part (6) on the machine side and clamped thereon.

3. Accessory according to Claim 2, **characterised in that** the ring part (10) is arranged on the machine-side end of the extractor housing (14).

4. Accessory according to any one of Claims 1 to 3, **characterised in that** the extractor housing (14) or the resiliently compressible area of the extractor housing (14) is formed by a bellows (19).

5. Accessory according to Claim 4, **characterised in that** the bellows (19) has a shape expanding towards the rear.

6. Accessory according to any one of Claims 1 to 5, **characterised in that** the rear area (20) of the extractor housing (14) facing the machine-side end and made of rigid material and the front area (21) of the extractor housing (14) facing the opposite front end (16), are resiliently compressible in the axial direction.

7. Accessory according to Claim 6, **characterised in that** the rear area (20) of the extractor housing (14) made from rigid material is formed by a sleeve part (22) on which is attached the bellows (19) forming the front area (21) of the extractor housing (14).

8. Accessory according to any one of Claims 4 to 7, **characterised in that** the bellows (19) is arranged exchangeably.

9. Accessory according to any one of Claims 1 to 8, **characterised in that** the extractor housing (14) is circular in cross-section.

10. Accessory according to any one of Claims 1 to 9, **characterised in that** through the handle (25) runs an extractor channel (26) which is connected firstly to the extraction chamber (15) of the extractor housing (14) and secondly can be connected to the dust extractor device.

11. Accessory according to Claim 10, **characterised in that** the extractor channel (26) is formed by a tubular piece (28) on which is arranged a handle element (29) forming the handle (25).

12. Accessory according to Claim 10 or 11, **characterised in that** in extension of the handle (25) a connector (30) is arranged for connection of a dust extractor hose.

13. Accessory according to Claim 12, **characterised in that** the connector (30) is formed by the end area of the tubular piece (28) protruding in front of the handle element (29).

14. Accessory according to any one of Claims 1 to 13, **characterised in that** on the device housing (9), adjustable parallel to the axial direction, is mounted a stop rod (31) to limit the drilling depth.

15. Accessory according to any one of Claims 1 to 14, **characterised in that** the device (33) for moving back the extractor housing (14) is mounted displaceable parallel to the axial direction.

16. Accessory according to Claim 15, **characterised in that** the device (33) for moving back the extractor housing (14) has a guide rod (35) guided on the handle (25).

17. Accessory according to Claim 16, **characterised in that** the guide rod (35) is connected to a connecting element (36) protruding transverse to this and attached to the front end area of the bellows (19).

18. Accessory according to Claim 16 or 17, **characterised in that** on the guide rod (35) is arranged an actuating part (37) protruding therefrom, on which the user can engage with a finger of his hand holding the handle (25).

19. Accessory according to any one of Claims 1 to 18, **characterised in that** the extractor housing (14) on its front end has axially protruding supporting protrusions (38) distributed over the periphery, via which the extractor housing (14) is supported during use on the workpiece to be drilled.

## Revendications

1. Accessoire pour aspirer la poussière générée par le perçage, destiné à des perceuses portatives à l'avant desquelles un outil de perçage dépassant dans le sens axial de la perceuse portative en position d'utilisation peut être fixé de manière démontable, ledit accessoire présentant un boîtier d'accessoire (9) qui peut se fixer de manière démontable à l'avant de la perceuse portative (1) et, dans la position d'utilisation, forme un boîtier d'aspiration (14) s'étendant dans le sens axial avec une poignée (25) dépassant radialement du boîtier d'aspiration (14), dans lequel ledit boîtier d'aspiration (14) délimite un espace d'aspiration (15), est ouvert à son extrémité avant (16) opposée dans la position d'utilisation de la perceuse portative (1) et venant en appui sur la pièce à percer (7) et peut être comprimé élastiquement dans le sens axial sur au moins une partie de sa longueur axiale, l'outil de perçage (3) pouvant s'étendre dans l'espace d'aspiration (15) dans la position d'utilisation et l'espace d'aspiration (15) pouvant être raccordé à un dispositif aspirateur de poussière, un système (33) permettant à l'utilisateur de reculer le boîtier d'aspiration (14) pour l'éloigner de la pièce, **caractérisé en ce que** le système (33) servant à reculer le boîtier d'aspiration (14) est en prise d'une part avec la zone d'extrémité avant du boîtier d'aspiration (14) et d'autre part est supporté dans la zone de la poignée (25) à un endroit accessible à l'utilisateur.

2. Accessoire selon la revendication 1, **caractérisé en ce que** le boîtier d'accessoire (9) présente une partie annulaire (10) qui peut être enfichée et bloquée sur une partie de collet (6) côté perceuse.

3. Accessoire selon la revendication 2, **caractérisé en ce que** la partie annulaire (10) est disposée à l'extrémité côté perceuse du boîtier d'aspiration (14).

4. Accessoire selon l'une des revendications 1 à 3, **caractérisé en ce que** le boîtier d'aspiration (14) ou la zone comprimable élastiquement du boîtier d'aspiration (14) est formé(e) par un soufflet (19).

5. Accessoire selon la revendication 4, **caractérisé en ce que** le soufflet (19) présente une forme qui s'élargit vers l'arrière.

6. Accessoire selon l'une des revendications 1 à 5, **caractérisé en ce que** la zone arrière (20) tournée vers l'extrémité côté perceuse du boîtier d'aspiration (14) est fait d'un matériau rigide et **en ce que** la zone avant (21) tournée vers l'extrémité avant (16) opposée du boîtier d'aspiration (14) peut être comprimée élastiquement dans le sens axial.

7. Accessoire selon la revendication 6, **caractérisé en ce que** la zone arrière en matériau rigide (20) du boîtier d'aspiration (14) est formée par une partie de manchon (22) sur lequel est monté le soufflet (19) formant la zone avant (21) du boîtier d'aspiration (14).

8. Accessoire selon l'une des revendications 4 à 7, **caractérisé en ce que** le soufflet (19) est disposé de façon à être interchangeable.

9. Accessoire selon l'une des revendications 1 à 8, **caractérisé en ce que** le boîtier d'aspiration (14) a une section de forme circulaire.

10. Accessoire selon l'une des revendications 1 à 9, **caractérisé en ce qu'**un conduit d'aspiration (26) qui est relié d'une part à l'espace d'aspiration (15) du boîtier d'aspiration (14) et qui peut être raccordé d'autre part au dispositif aspirateur de poussière s'étend dans la poignée (25).

11. Accessoire selon la revendication 10, **caractérisé en ce que** le conduit d'aspiration (26) est constitué d'un tronçon de tube (28) sur lequel est disposé un élément de préhension (29) formant la poignée (25).

12. Accessoire selon la revendication 10 ou 11, **caractérisé en ce qu'**un raccord (30) est disposé dans le prolongement de la poignée (25) afin de raccorder un flexible d'aspiration de poussière.

13. Accessoire selon la revendication 12, **caractérisé en ce que** le raccord (30) est formé par la zone d'extrémité du tronçon de tube (28) qui dépasse de l'élément de préhension (29).

14. Accessoire selon l'une des revendications 1 à 13, **caractérisé en ce qu'**une tige de butée (31) servant à limiter la profondeur de perçage est supportée sur le boîtier d'accessoire (9) de façon à pouvoir être déplacée parallèlement à la direction axiale.

15. Accessoire selon l'une des revendications 1 à 14, **caractérisé en ce que** le système (33) de recul du boîtier d'aspiration (14) est supporté de façon à pouvoir être déplacé parallèlement à la direction axiale.

16. Accessoire selon la revendication 15, **caractérisé en ce que** le système (33) de recul du boîtier d'aspiration (14) présente une tige de guidage (35) guidée sur la poignée (25).

17. Accessoire selon la revendication 16, **caractérisé en ce que** la tige de guidage (35) est reliée à un élément de liaison (36) qui en dépasse radialement et qui est fixé sur la zone avant du soufflet (19).

18. Accessoire selon la revendication 16 ou 17, **caractérisé en ce qu'**une partie d'actionnement (37) qui dépasse de la tige de guidage et que l'utilisateur peut manoeuvrer avec un doigt de la main qui tient la poignée (25) est disposée sur la tige de guidage (35).

19. Accessoire selon l'une des revendications 1 à 18, **caractérisé en ce que** le boîtier d'aspiration (14) présente à son extrémité avant des saillies d'appui (38) dépassant axialement et réparties sur la circonférence au moyen desquelles, en cours d'utilisation, le boîtier d'aspiration (14) s'appuie sur la pièce à percer.
